# EUROPEAN PATENT APPLICATION

(11) **EP 4 293 388 A1**
(43) Date of publication of application: **20.12.2023**
(21) Application number: 22762524.1
(22) Date of filing: 01.03.2022
(51) Int. Cl.: G01S 13/02, G01S 13/931, G01S 7/02

(54) **RADAR AND EARLY-WARNING SYSTEM**

(30) Priority: 04.03.2021 CN 202120472012 U
(71) Applicant: Shenzhen Skyfend Technology Co., Ltd., Shenzhen, Guangdong 518055 (CN)
(72) Inventor: MA, Yanwen, Shenzhen, Guangdong 518055 (CN); LIN, Zhongshan, Shenzhen, Guangdong 518055 (CN)
(74) Representative: Harris, Oliver John Richard
(86) International application number: PCT/CN2022/078646
(87) International publication number: WO 2022/184060

(57) **Abstract**

Disclosed in the embodiments of the present application are a radar and an early-warning system. The radar comprises a housing, a first detection assembly, a second detection assembly and a connector, wherein a connection port is provided on the housing, and the connector is detachably mounted at the connection port; the first detection assembly comprises a first antenna board and a first antenna mounted on the first antenna board, the first antenna is used for emitting a first millimeter wave, and the first millimeter wave has a first detection viewing angle; the second detection assembly comprises a second antenna board and a second antenna mounted on the second antenna board, the second antenna is used for emitting a second millimeter wave, and the second millimeter wave has a second detection viewing angle; and there is an intersection portion of emission regions of the first millimeter wave and the second millimeter wave, and a detection viewing angle after the first detection viewing angle and the second detection viewing angle are superimposed is greater than or equal to 180 degrees. By means of the above-mentioned configurations, the disassembly, assembly, and maintenance of a connector are facilitated, such that the maintenance cost of a radar can be reduced, thereby avoiding the replacement of the entire radar when the connector is damaged, and also enlarging a detection range of the radar.

## Description

### CROSS-REFERENCE TO RELATED APPLICATIONS

The present application claims priority to the Chinese patent application No. 202120472012.X entitled "radar and early-warning system" filed on March 4, 2021, to the China National Intellectual Property Administration, the entire contents of which are incorporated herein by reference.

### TECHNICAL FIELD

The embodiments of the present application relate to the technical field of radars, and in particular to a radar and an early-warning system.

### BACKGROUND

With the advent of the era of intelligent driving, the demand for safety in intelligent vehicles is increasing, and more sensors are needed to ensure the driver's safety and the ability to detect and recognize the vehicle's surrounding environment. Millimeter wave radar, as an important sensing element in intelligent driving, can measure the distance, angle, speed, and so on with the detected object.

In the implementation of the present application, the inventors have found that in the prior art, all the millimeter wave radars use a single antenna board, and the detection angles of the radars are all less than 180 degrees, which cannot satisfy the detection in the range of the lateral front-rear distance of a commercial vehicle, thus leading to a large detection blind zone of the millimeter wave radar, and resulting in a large safety hazard of the millimeter wave radar during the use.

### SUMMARY

The embodiments of the present application are intended to provide a radar and an early-warning system to increase the detection field angle range of a millimeter wave radar and improve the safety performance of the entire vehicle.

The present application provides a radar, including:
a housing;
a power supply assembly accommodated in the housing;
a first detection assembly accommodated in the housing and electrically connected to the power supply assembly, wherein the first detection assembly comprises a first antenna board and a first antenna mounted on the first antenna board, the first antenna is used for emitting the first millimeter wave, and the first millimeter wave has a first detection viewing angle;
a second detection assembly accommodated in the housing and electrically connected to the power supply assembly, wherein the second detection assembly comprises a second antenna board and a second antenna mounted on the second antenna board, the second antenna board is arranged at a pre-set angle with the first antenna board, the second antenna is used for emitting a second millimeter wave, and the second millimeter wave has a second detection viewing angle; and
a connector, the connector being detachably mounted on the connection port and electrically connected to the power supply assembly;
wherein there is an intersection portion of emission regions of the first millimeter wave and the second millimeter wave, and a detection field angle after the first detection viewing angle and the second detection viewing angle are superimposed is greater than or equal to 180 degrees.

In some embodiments, one end of the connector which is connected to the connection port is provided with an elastic snap, and the elastic snap is snap-connected to the connection port.

In some embodiments, the first detection assembly further comprises a first radio frequency chip, the first radio frequency chip is arranged on the first antenna board, and the first radio frequency chip is electrically connected to the first antenna;
the second detection assembly further comprises a second radio frequency chip, the second radio frequency chip is arranged on the second antenna board, and the second radio frequency chip is electrically connected to the second radio frequency antenna;
the first radio frequency chip and the second radio frequency chip are electrically connected.

In some embodiments, the power supply assembly comprises a baseband board and a power supply chip arranged on the baseband board; the first antenna board and the second antenna board are both electrically connected to the baseband board; the power supply chip is respectively electrically connected to the first radio frequency chip and the second radio frequency chip.

In some embodiments, the power supply assembly further comprises a first connection seat and a second connection seat, the first connection seat and the second connection seat are both 90-degree rotating angle connection seats, the first antenna board is electrically connected to a power supply board via the first connection seat, and the second antenna board is electrically connected to the power supply board via the second connection seat.

In some embodiments, the housing comprises a base and an upper cover, wherein the upper cover covers the base, and the first detection assembly, the second detection assembly, and the power supply assembly are all accommodated in a cavity formed by enclosing the upper cover and the base;
the connection port is provided on the base;
the upper cover is made of a material that can penetrate millimeter waves;
the base is made of an aluminium alloy material.

In some embodiments, the base comprises a base body and a protrusion extending from the middle portion of the base body to the upper cover, wherein the first antenna board is mounted between the first end of the protrusion and the first end of the base body, and the second antenna board is mounted between a second end of the protrusion and the second end of the base body.

In some embodiments, the shape of the upper cover is adapted to the shape enclosed by the first detection assembly, the second detection assembly, and the power supply assembly.

In some embodiments, the radar comprises a heat dissipation assembly, the heat dissipation assembly is accommodated in the housing, the heat dissipation assembly comprises a first heat conductive pad, a second heat conductive pad, a first heat dissipation piece, and a second heat dissipation piece, the first heat conductive pad is mounted between the first radio frequency chip and the first heat dissipation piece, the second heat conductive pad is mounted between the second chip and the second heat dissipation piece, and the first heat dissipation piece and the second heat dissipation piece are both mounted on the base.

In some embodiments, the radar further comprises a sealing ring, the base is provided with a sealing groove, the sealing ring is provided on the sealing groove, and when the upper cover is provided on the base, the inner wall of the upper cover abuts against the sealing ring.

In some embodiments, a sealing gasket is embedded in the connection port, and when the connector is inserted into the connection port, the connector abuts against the sealing gasket.

In some embodiments, the value of the first detection viewing angle is greater than or equal to 90 degrees and less than or equal to 150 degrees;
the value of the second detection viewing angle is greater than or equal to 90 degrees and less than or equal to 150 degrees;
the preset angle is greater than or equal to 90 degrees and less than or equal to 150 degrees.

Embodiments of the present application further provide an early-warning system, comprising: a radar; and
an acoustic early-warning device and/or a display screen early-warning device, wherein the radar is electrically connected to the acoustic early-warning device and/or the display screen early-warning device.

The beneficial effects of the present application are that by providing the first detection assembly and the second detection assembly, the detection field angle after the superimposition of the first detection viewing angle and the second detection viewing angle is greater than or equal to 180 degrees, the range of the detection field angle of the radar is increased, and the driving safety of the automobile is improved; at the same time, the connection between the connector and the housing is a detachable connection, so as to facilitate the disassembly, assembly, and maintenance of the connector, thereby saving the maintenance cost of the radar and avoiding the replacement of the entire radar when the connector is damaged.

### BRIEF DESCRIPTION OF THE DRAWINGS

One or more embodiments are exemplified by the drawings in the accompanying drawings corresponding thereto. These exemplified descriptions do not constitute a limitation on the embodiments. Elements in the drawings having the same reference number designations are illustrated as similar elements, and unless otherwise particularly stated, the drawings do not constitute a proportional limitation.
Fig. 1 is a schematic structural diagram of a radar provided in an embodiment of the present application;
Fig. 2 is an explosive diagram of the radar shown in Fig. 1;
Fig. 3 is a schematic diagram of a detection field angle of the radar shown in Fig. 1;
Fig. 4 is a schematic diagram of the mounting of a power supply assembly and a first detection assembly and a second detection assembly in the radar shown in Fig. 1;
Fig. 5 is another schematic diagram of a detection field angle of the radar shown in Fig. 1;
Fig. 6 is a schematic diagram of the detection field angle of a traditional radar;
Fig. 7 is a schematic diagram from another viewing angle of the structure shown in Fig. 4;
Fig. 8 is a block diagram of a system of the radar shown in Fig. 1;
Fig. 9 is an explosive diagram of a part of the radar shown in Fig. 1;
Fig. 10 is a cross-sectional view of the radar shown in Fig. 1.

### DETAILED DESCRIPTION OF THE INVENTION

In order to make the present application readily understood, a more detailed description of the present application will be rendered with reference to the appended drawings and specific embodiments. It should be noted that when an element is referred to as being "secured to"/ "mounted to" another element, it can be directly on the other element or one or more intervening elements may be present therebetween. When one element is referred to as being "connected" to another element, it can be directly connected to the other element or one or more intervening elements may be present therebetween. In the description, the orientation or positional relationships indicated by the terms used herein "up", "down", "inside", "outside", "vertical", "horizontal" etc. are based on the orientation or positional relationship shown in the drawings, and are only for the convenience of describing the application and simplifying the description, rather than indicating or implying that the referred device or element must have a specific orientation, or be constructed and operated in a specific orientation, and therefore cannot be construed as a limitation of the present application. Furthermore, the terms "first", "second", etc. are only used for descriptive purposes and are not to be construed as indicating or implying relative importance.

Unless defined otherwise, all technical and scientific terms used in the specification have the same meaning as commonly understood by one of ordinary skill in the art to which the present application belongs. The terminology used in the description of the present application is for the purpose of describing specific embodiments only and is not intended to limit the present application. As used herein, the term "and/or" includes any and all combinations of one or more of the associated listed items.

Furthermore, the technical features involved in the different embodiments of the present application described below can be combined with each other as long as they do not conflict with each other.

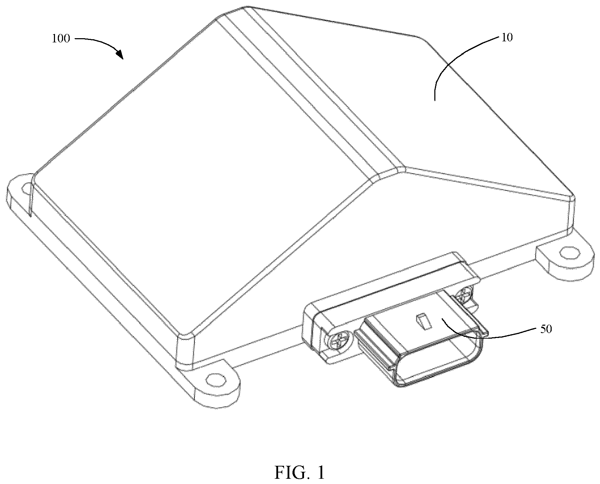

Fig. 1 shows a radar 100 provided in the embodiments of the present application. The radar 100 is mounted on an automobile and is used for detecting visual blind zones on the left side and right side of the automobile so as to assist a driver in accurately identifying an obstacle in the blind zone and preventing the vehicle from colliding with the obstacle during driving.

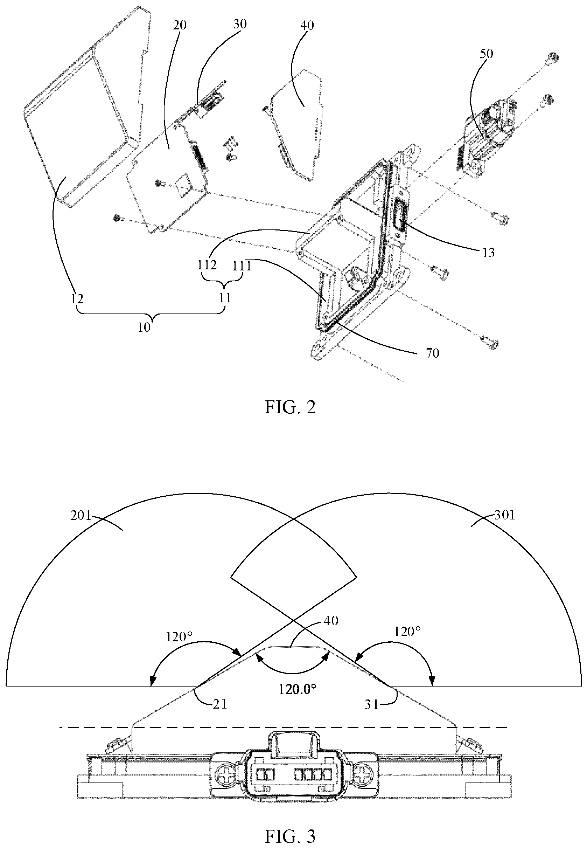

With reference to Fig. 2, there is shown an explosive diagram of a radar 100 provided in an embodiment of the present application. The radar 100 comprises a housing 10, a first detection assembly 20, a second detection assembly 30, a power supply assembly 40, and a connector 50. The first detection assembly 20, the first detection assembly 20, and the power supply assembly 40 are all accommodated in the housing 10. The first detection assembly 20 and the second detection assembly 30 are both electrically connected to the power supply assembly 40, and the power supply assembly 40 is used for supplying power to the first detection assembly 20 and the second detection assembly 30; the connector 50 is mounted outside the housing 10 and electrically connected to the power supply assembly 40, and the connector 50 is used for electrically connecting the power supply assembly 40 to an external device. For example, the connector 50 is connected to a power supply apparatus, so that the power supply apparatus can provide an operating current and/or an operating voltage to the power supply assembly 40.

In the present embodiment, the radar 100 is mounted on an automobile through the housing 10. The first detection assembly 20 and the second detection assembly 30 are used for parsing relevant information such as the position, moving speed, and direction of an obstacle through a certain algorithm by emitting and receiving millimeter waves (millimeter electromagnetic waves) reflected by the obstacle. For example, when the radar 100 is mounted on a vehicle, the first detection assembly 20 and the second detection assembly 30 sense the position, the moving speed, and the direction of an obstacle so as to provide an information condition for a vehicle control system. The vehicle control system makes a corresponding active safety measure or selects an appropriate automatic driving strategy according to the information fed back by the first detection assembly 20 and the second detection assembly 30.

Referring to Fig. 3, the first detection assembly 20 is configured to emit the first millimeter wave 201 having a first detection viewing angle for detecting an obstacle within the first detection viewing angle, which is an angular range detectable by the first millimeter wave 201, and to receive the first millimeter wave reflected by the obstacle. The second detection assembly 30 is configured to emit the second millimeter wave 301 having a second detection viewing angle for detecting an obstacle within the second detection viewing angle, and to receive the second millimeter wave reflected by the obstacle, the second detection viewing angle being an angular range detectable by the second millimeter wave 301. The emission regions of the first millimeter wave 201 and the second millimeter wave 301 have an intersection portion, and a detection field angle after the first detection viewing angle and the second detection viewing angle are superimposed is greater than or equal to 180 degrees. The detection field angle after the first detection viewing angle and the second detection viewing angle are superimposed is the detection field angle of the radar 100.

In the embodiments of the present application, the first detection viewing angle and the second detection viewing angle being superimposed means that the central axes of the first millimeter wave 201 and the second millimeter wave 301 are located in the same plane and do not coincide. At the same time, when two adjacent sides of the first millimeter wave 201 and the second millimeter wave 301 intersect or coincide, the sum of the sizes of the first detection viewing angle and the second detection viewing angle minus the detection viewing angle of the overlapping part of the two.

It could be understood that the intersection portion may be 0.

It could be understood that the sizes of the first detection viewing angle and the second detection viewing angle can be selected according to practical requirements. At the same time, the sizes of the first detection viewing angle and the second detection viewing angle can be equal or different, and it is only necessary that the detection field angle after the first detection viewing angle and the second detection viewing angle are superimposed is greater than or equal to 180 degrees. For example, both the first detection viewing angle and the second detection viewing angle are 120 degrees, or the first detection viewing angle is 130 degrees and the second detection viewing angle is 120 degrees.

With continued reference to Fig. 2, the housing 10 comprises a base 11 and an upper cover 12. The upper cover 12 covers the base 11, and the first detection assembly 20, the second detection assembly 30, and the power supply assembly 40 are all accommodated in a cavity formed by enclosing the upper cover 12 and the base 11, so as to protect the detection assembly 20, the second detection assembly 30, and the power supply assembly 40; the base 11 is provided thereon with a connection port 13, and the connection port 13 is used for connecting the connector 50, so that the connection between the connector 50 and the housing 10 is a detachable connection, facilitating the disassembly and assembly and maintenance of the connector 50, so as to save the maintenance cost of the radar 100 and avoid the replacement of the entire radar 100 when the connector is damaged.

The detachable connection can be a snap connection or a threaded connection, etc. For example, one end of the connector 50 connected to the connection port 13 is provided with an elastic snap, and the elastic snap is snap-connected to the connection port 13. Or the connector is threadedly connected to the connection port.

The base 11 is made of an aluminium alloy material, facilitating heat dissipation of components and parts inside the housing 10 (such as the first detection assembly 20 and the second detection assembly 30), and improving the service life of the radar 100. The upper cover 12 is made of a material that can penetrate through millimeter waves, so that the first millimeter wave 201 and the second millimeter wave 301 can exit by penetrating through the upper cover 12. Moreover, the millimeter wave reflected by an obstacle can penetrate through the upper cover 12 and be received by the first detection assembly 20 and the second detection assembly 30.

In some embodiments, the base 11 includes a base body 111 and a protrusion 112 extending from a middle portion of the base body toward the upper cover. The first detection assembly 20 is mounted between the first end of the protrusion 112 and the first end of the base body 111, and the second detection assembly 30 is mounted between the second end of the protrusion 112 and the second end of the base body 111 such that the emission region of the first millimeter wave 201 and the emission region of the second millimeter wave 301 have an intersection portion.

In some embodiments, to facilitate the mounting of the first detection assembly 20 and the second detection assembly 30, a bevel is provided on the protrusion 112 and base body 111 at the junction of the first detection assembly 20 and the second detection assembly 30.

In some embodiments, to reduce the volume of the radar 100, the shape of the cover 12 is adapted to the shape formed by enclosing the first detection assembly 20, the second detection assembly 30, and the power supply assembly 40.

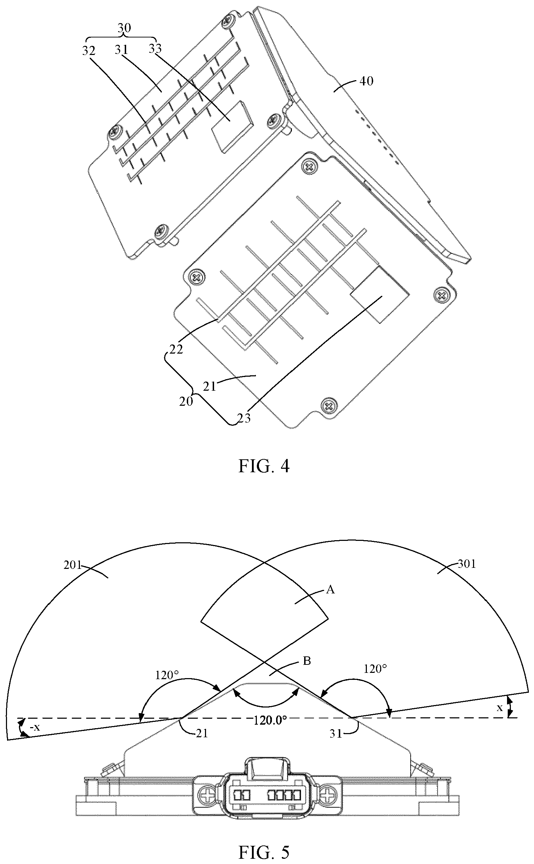

With reference to Fig. 4, the first detection assembly 20 comprises a first antenna board 21 and a first antenna 22 and a first radio frequency chip 23 mounted on the first antenna board 21. The first antenna board 21 is mounted between the first end of the protrusion 112 and the first end of the base body 111, the first radio frequency chip 23 is electrically connected to the first antenna 22, and the first antenna 22 is used for emitting the first millimetre wave 201 and receiving the first millimetre wave reflected by the obstacle; the first radio frequency chip 23 is used for converting radio signal communication into a certain radio signal waveform and resonantly emitting the same via the first antenna 22.

The second detection assembly 30 comprises a second antenna board 31 and a second antenna 32 and a second radio frequency chip 33 mounted on the second antenna board 31; the second antenna board 31 is mounted between the second end of the protrusion 112 and the second end of the base body 111; the second radio frequency chip 33 is electrically connected to the second antenna 32, and the second radio frequency chip 33 is electrically connected to the first radio frequency chip 23; the second antenna 32 is used for emitting the second millimetre wave 301 and receiving the second millimetre wave reflected by an obstacle. The second radio frequency chip 33 is used for converting radio signal communication into a certain radio signal waveform, and resonantly emitting the same via the second antenna 32. The detection field angle after the first detection viewing angle of the first millimeter wave 201 and the second detection viewing angle of the second millimeter wave 301 are superimposed is greater than or equal to 180 degrees, so that the detection viewing angle of the radar 100 is greater than or equal to 180 degrees, increasing the detection range of the radar 100 and improving the safety of an automobile.

In the present embodiment, both the first antenna board 21 and the second antenna board 31 have a plate-like structure, so that the first antenna board 21 and the second antenna board 31 can be better fixed to the base 11.

In a specific implementation process, the first antenna board 21 and the second antenna board 31 can be connected via a BTB (board to board connector) interface or an FPC (Flexible Printed Circuit board) interface so as to realize SPI (Serial Peripheral Interface) or UART (Universal Asynchronous Receiver/Transmitter) communication between the first antenna board 21 and the second antenna board 31. The first antenna board 21 and the second antenna board 31 adopt a master-slave mode and output a detection signal to the outside via a CAN or CAN FD interface.

It could be understood that the first radio frequency chip 23 and the second radio frequency chip 33 comprise a micro-control unit for processing and calculating radio frequency signals reflected by an obstacle so as to determine the relevant information such as the positions, moving speeds, and directions of the automobile and the obstacle.

With reference to Fig. 5, in an embodiment of the present application, the first antenna board 21 and the second antenna board 31 are symmetrically arranged, and the first antenna board 21 and the second antenna board 31 are arranged at a preset included angle (for example, 120°), and the included angle between the first antenna board 21 and the second antenna board 31 can be adjusted by the height of the protrusion 112. At an intersection portion of the emission regions of the first millimeter wave 201 and the second millimeter wave 301, an overlapping portion A, which is a common detection area of the first millimeter wave 201 and the second millimeter wave 301, and a staggered portion B, which is a detection blind zone of the first millimeter wave 101 and the second millimeter wave 201, occur.

It needs to be noted that, in practical applications, the detection blind zone of the staggered portion B is relatively close to the vehicle body, the detection blind zone of the staggered portion B is located between the first millimeter wave 201 and the second millimeter wave 301, and the area is relatively small. During the running of the automobile, the first millimeter wave 201 and the second millimeter wave 301 can detect 180 degrees of field angle on one side of the vehicle body. Generally, an obstacle does not suddenly appear on the detection blind zone of the staggered portion B. When an obstacle appears on one side of the automobile on which the radar 100 is mounted, the obstacle is detected by the first millimeter wave 201 and the second millimeter wave 301, so that the detection blind zone of the staggered portion B is an unnecessary detection area.

The larger the first detection viewing angle, the second detection viewing angle, and/or the preset included angle is, the smaller the area of the detection blind zone of the staggered portion B is. It needs to be noted that the larger the size of the first detection viewing angle and the second detection viewing angle, the more difficult it is to develop the radar 100 on the premise that the detection accuracy of the first detection assembly 20 and the second detection assembly 30 needs to be ensured.

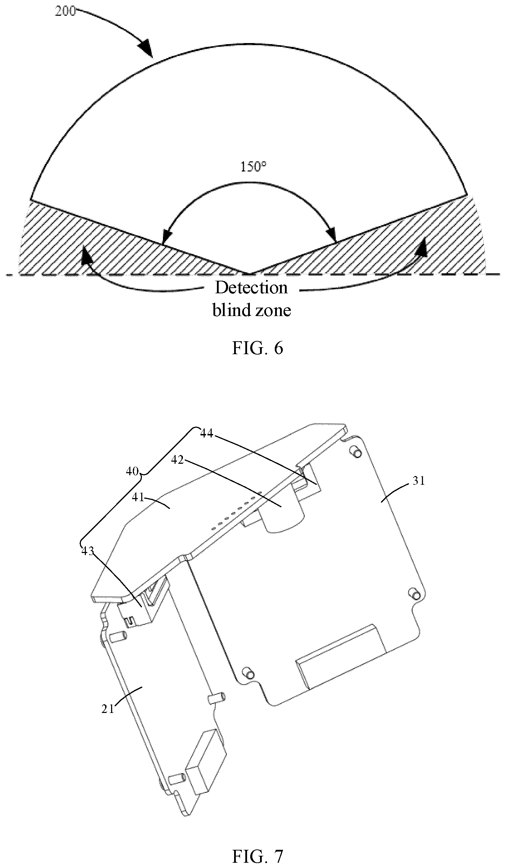

Referring to Fig. 6, Fig. 6 is a schematic diagram of a traditional radar 200. The traditional radar 200 has a detection blind zone due to the size of a detection field angle of 150 degrees, which is less than 180 degrees, and lacks mounting redundancy. Specifically, when the traditional radar 200 is mounted on one of the left side and right side of an automobile, a detection blind zone appears between the detection field angle of the radar 200 and the automobile, which has a certain hidden security danger. The central axis of the field angle of the radar 200 needs to be perpendicular to the central axis of the automobile, or otherwise the detection orientation of the radar 200 deviate. Therefore, in the process of mounting the radar 200 to an automobile, a high mounting accuracy is required. After the mounting is completed, calibration needs to be performed in a relatively harsh calibration environment, for example, a relatively open natural environment, or a straight road for running dynamic calibration, etc.

Compared with the traditional radar 200, the overall detection field angle of the radar 100 provided in the embodiments of this application is greater than or equal to 180 degrees. On the one hand, after the radar 100 is mounted on one side of an automobile, the detection of which field angle is 180 degrees can be performed on that side, eliminating the detection blind zone of the traditional radar 200 and improving the safety of the automobile running; on the other hand, the mounting horizontal angle direction of the radar 100 has a great redundancy, so that the radar 100 can be mounted within a redundancy range of ±x degrees (as shown in figure 5) in the horizontal direction. Therefore, in the case of satisfying the detection field angle, the mounting accuracy requirement is reduced and the mounting speed is improved.

The size of the x value depends on the detection field angle of the radar 100. For example, when the detection field angle of the radar 100 is 190 degrees, the x value is 5, and when the detection field angle of the radar 100 is 200 degrees, the x value is 10.

In an embodiment of the present application, the value of the first detection viewing angle is greater than or equal to 90 degrees and less than or equal to 150 degrees; the value of the second detection viewing angle is greater than or equal to 90 degrees and less than or equal to 150 degrees; the value of the preset included angle is greater than 90 degrees and less than or equal to 150 degrees. By the above-mentioned arrangement, the radar 100 can detect a field angle greater than 180 degrees, and the mounting redundancy of the radar 100 is ensured, so that the radar 100 can be mounted within a certain angle range in the horizontal direction. At that, the mounting accuracy requirement of the radar 100 is reduced and the mounting speed is improved when the detection field angle is satisfied. Since one side of the vehicle body actually needs the detection angular range to be 180 degrees, a part of the radar 100 exceeding 180 degrees is directly projected on the vehicle body. After the mounting is completed, static environment calibration can be performed through an algorithm.

Further, as shown in Fig. 5, both the first detection viewing angle and the second detection viewing angle are 120 degrees, and the preset included angle is 120 degrees. With the above arrangement, the detection accuracy of the first detection assembly 20 and the second detection assembly 30 is ensured, and a balance point is obtained between the detection accuracy and the development difficulty, so that the detection blind zone of the staggered portion B is reduced. The starting positions where the first millimeter wave 201 and second millimeter wave 301 exit are located on the same horizontal line, and the detection field angle after the superimposition of the first detection viewing angle and the second detection viewing angle is equal to 190 degrees. The effective detection field angle of the radar 100 is 180 degrees, the part exceeding 180 degrees is the mounting redundancy of the radar 100, and the radar 100 can be mounted within the redundancy range of ±5 degrees in the horizontal direction.

With reference to Fig. 7, the power supply assembly 40 comprises a baseband board 41 and a power supply chip 42 arranged on the baseband board 41. The power supply chip 42 is electrically connected to the first radio frequency chip 23 and the second radio frequency chip 33 respectively, the power supply chip 42 is used for supplying power to the first radio frequency chip 23 and the second radio frequency chip 33. At the same time, the power supply chip 42 is also used for data exchange between the first radio frequency chip 23 and the second radio frequency chip 33.

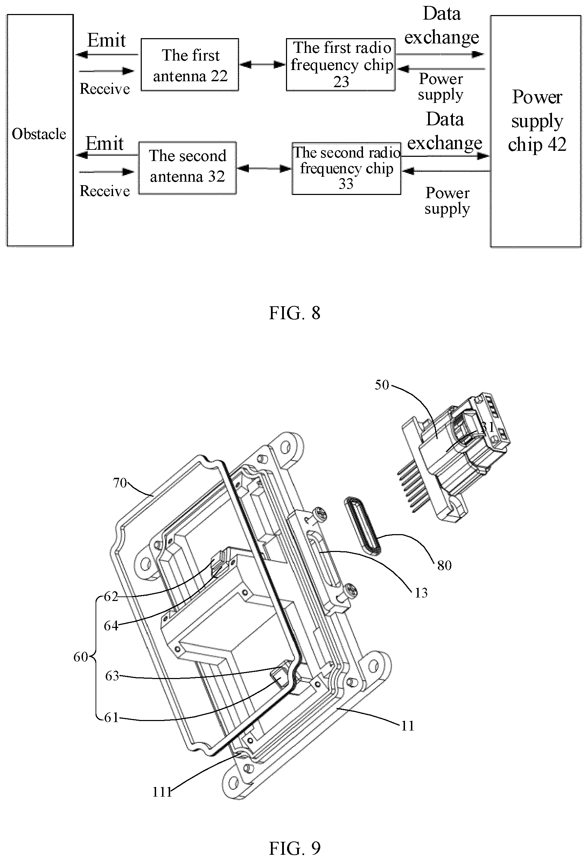

Specifically, referring to Fig. 8, the first antenna 22 emits the first millimetre waves, receives the first millimetre wave reflected by the obstacle, and obtains the first data by processing by a micro-control unit of the first radio frequency chip 23; the second antenna 32 emits the second millimetre wave, receives the second millimetre wave reflected by the obstacle, and obtains the second data through processing by a micro-control unit of the second radio frequency chip 23; the power supply chip 42 determines the relative distance, relative speed, angle and movement direction, etc. between the automobile and the obstacle through the first data and the second data.

The power supply assembly 40 further comprises a connection seat (as shown in Fig. 7), the connection seat comprises a first connection seat 43 and a second connection seat 44, the first connection seat 43 and the second connection seat 44 are both 90-degree rotating angle connection seats, the first antenna board 21 is electrically connected to the baseband board 41 via the first connection seat 43, and the second antenna board 31 is electrically connected to the baseband board 41 via the second connection seat 44 so as to realize SPI (Serial Peripheral Interface) or UART (Universal Asynchronous Receiver/Transmitter) communication between the first antenna board 21 and the second antenna board 31. The first antenna board 21 and the second antenna board 31 adopt a master-slave mode and output a detection signal to the outside through a CAN or CAN FD interface.

The first connection seat 43 and the second connection seat 44 are both 90-degree rotating angle connection seats, so that the first antenna board 21 and the second antenna board 31 are both vertically connected to the baseband board 41, and the connection is more secure.

The shape of the upper cover 12 is adapted to the shape formed by enclosing the first antenna board 21, the second antenna board 31, and the baseband board 41, so as to reduce the overall volume of the radar 100 and save costs.

Referring to Fig. 9, the radar 100 further comprises a heat dissipation assembly 60, the heat dissipation assembly 60 being accommodated in the housing 10. The heat dissipation assembly 60 comprises a heat conductive pad and a heat dissipation piece, the heat dissipation piece being mounted to the housing 10. Specifically, the heat conductive pad comprises a first heat conductive pad 61 and a second heat conductive pad 62, the heat dissipation piece comprises a first heat dissipation piece 63 and a second heat dissipation piece 64, the first heat conductive pad 61 is mounted between the first radio frequency chip 23 and the first heat dissipation piece 63, the second heat conductive pad 62 is mounted between the second radio frequency chip 33 and the second heat dissipation piece 64, and the first heat dissipation piece 63 and the second heat dissipation piece 64 are both mounted to the base 11. The first heat conductive pad 61 is used for conducting the heat generated by the first radio frequency chip 23 to the first heat dissipation piece 63 and then dissipating the same via the base 11; the second heat conductive pad 62 is used to conduct the heat generated by the second radio frequency chip 33 to the second heat dissipation piece 64 and then to dissipate the same via the base 11.

It could be understood that the heat conductive pad and heat dissipation piece may also be used to conduct the heat and dissipate the heat of other components and parts within the housing 10, thereby protecting electronic parts and components within the housing 10, enhancing the operational stability of the radar 100, and increasing the service life of the radar.

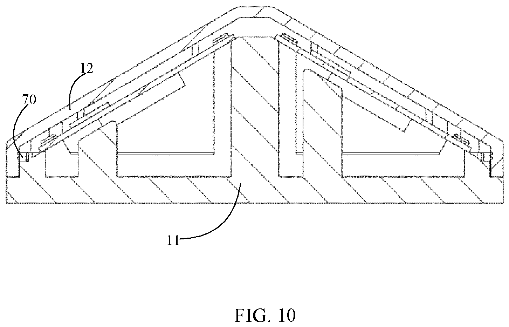

With reference to Fig. 10, the radar 100 comprises a sealing ring 70, the base body 11 is provided with a sealing groove 111, and the sealing ring 70 is provided on the sealing groove 111. When the upper cover 12 covers the base 11, the inner wall of the upper cover 12 abuts against the sealing ring 70, so as to seal the junction between the upper cover 12 and the base 11 via the sealing ring 70, thereby preventing dust, vapour, and the like from penetrating into the housing 10 and damaging components and parts in the housing 10.

The sealing ring 70 may be made of rubber material.

The radar 100 further comprises a sealing gasket 80 (as shown in Fig. 9). The sealing gasket 80 is embedded in the connection port 13. When the connector 50 is inserted into the connection port 13, the connector 50 abuts against the sealing gasket 80 so as to seal the junction between the connector 50 and the connection port 13 via the sealing gasket 80, thereby preventing dust, vapour, and the like from penetrating into the connection port 13 and damaging the connector 50.

The embodiments of the present application also provide an early-warning system. The early-warning system comprises an acoustic early-warning device and/or a display screen early-warning device, and the radar 100 as stated above. The radar 100 is electrically connected to the acoustic early-warning device, the optical early-warning device, the vibration early-warning device, and/or the display screen early-warning device, and the radar 100 is used for performing obstacle presence, distance measurement, speed measurement, and/or orientation measurement on a target to be measured; the acoustic early-warning device is used for sending out an alarm sound when the radar 100 detects that the distance between the obstacle target and the vehicle body is less than a pre-set value; the display screen early-warning device is used for displaying a warning interface when the radar 100 detects that the distance between the obstacle target and the vehicle body is less than the preset value.

In some embodiments, the early-warning system further comprises an optical early-warning device or a vibration early-warning device. The optical early-warning device is used for sending out a flashing warning light when the radar 100 detects that the distance between the obstacle target and the vehicle body is less than a preset value; the vibration early-warning device is used for generating vibration when the radar 100 detects that the distance between the obstacle target and the vehicle body is less than a preset value. In order to ensure that a driver can quickly perceive the occurrence of an obstacle target, the vibration early-warning device is mounted on a steering wheel of an automobile. The remaining structures (acoustic early-warning device and display screen early-warning device) refer to the prior art and will not be described in detail herein.

The present application provides a radar and an early-warning system, comprising a housing 10, a first detection assembly 20, a second detection assembly 30, and a connector 50. The housing 10 is provided with a connection port 13, and the connector is detachably mounted on the connection port 13; the first detection assembly 20 comprises a first antenna board 21 and a first antenna 22 mounted on the first antenna board 21, the first antenna 22 being used for emitting the first millimetre wave 201, and the first millimetre wave 201 having the first detection viewing angle; the second detection assembly 30 comprises a second antenna board 31 and a second antenna 32 mounted on the second antenna board 31, the second antenna 32 being used for emitting the second millimetre wave 301, and the second millimetre wave 301 having a second detection viewing angle; the emission regions of the first millimeter wave and the second millimeter wave have an intersection portion, and the detection field angle after the first detection viewing angle and the second detection viewing angle are superimposed is greater than or equal to 180 degrees, so that the radar can perform detection with a field angle of 180 degrees, improving the safety of automobile driving; at the same time, the connection between the connector and the housing is a detachable connection, facilitating the disassembly, assembly, and maintenance of the connector 50, thus saving the maintenance cost of the radar 100 and avoiding replacing the entire radar 100 when the connector is damaged.

The above description is only an implementation mode of the present application, and is not intended to limit the scope of the patent of the present application. Any equivalent structure or equivalent process transformation made by using the contents of the description and accompanying drawings of the present application, or directly or indirectly applied to other related technical fields is similarly included within the scope of patent protection of the present application.

## Claims

1. A radar, **characterized by** comprising:
a housing provided with a connection port;
a power supply assembly accommodated in the housing;
a first detection assembly accommodated in the housing and electrically connected to the power supply assembly, wherein the first detection assembly comprises a first antenna board and a first antenna mounted on the first antenna board, the first antenna is used for emitting a first millimeter wave, and the first millimeter wave has a first detection viewing angle;
a second detection assembly accommodated in the housing and electrically connected to the power supply assembly, wherein the second detection assembly comprises a second antenna board and a second antenna mounted on the second antenna board, the second antenna board is arranged at a pre-set angle with the first antenna board, the second antenna is used for emitting a second millimeter wave, and the second millimeter wave has a second detection viewing angle; and
a connector, the connector being detachably mounted on the connection port and electrically connected to the power supply assembly;
wherein there is an intersection portion of emission regions of the first millimeter wave and the second millimeter wave, and a detection field angle after the first detection viewing angle and the second detection viewing angle are superimposed is greater than or equal to 180 degrees.

2. The radar according to claim 1, **characterized in that**
one end of the connector which is connected to the connection port is provided with an elastic snap, and the elastic snap is snap-connected to the connection port.

3. The radar according to claim 2, **characterized in that**
the first detection assembly further comprises a first radio frequency chip, the first radio frequency chip is arranged on the first antenna board, and the first radio frequency chip is electrically connected to the first antenna;
the second detection assembly further comprises a second radio frequency chip, the second radio frequency chip is arranged on the second antenna board, and the second radio frequency chip is electrically connected to the second antenna;
the first radio frequency chip and the second radio frequency chip are electrically connected.

4. The radar according to claim 3, **characterized in that**
the power supply assembly comprises a baseband board and a power supply chip arranged on the baseband board; the first antenna board and the second antenna board are both electrically connected to the baseband board; the power supply chip is respectively electrically connected to the first radio frequency chip and the second radio frequency chip.

5. The radar according to claim 4, **characterized in that**
the power supply assembly further comprises a first connection seat and a second connection seat, the first connection seat and the second connection seat are both 90-degree rotating angle connection seats, the first antenna board is electrically connected to a power supply board via the first connection seat, and the second antenna board is electrically connected to the power supply board via the second connection seat.

6. The radar according to any one of claims 1 to 5, **characterized in that**
the housing comprises a base and an upper cover, wherein the upper cover is provided on the base, and the first detection assembly, the second detection assembly, and the power supply assembly are all accommodated in a cavity formed by enclosing the upper cover and the base;
the connection port is provided on the base; the upper cover is made of a material that can penetrate millimeter waves;
the base is made of an aluminium alloy material.

7. The radar according to claim 6, **characterized in that**
the base comprises a base body and a protrusion extending from a middle portion of the base body to the upper cover, wherein the first antenna board is mounted between a first end of the protrusion and the first end of the base body, and the second antenna board is mounted between a second end of the protrusion and the second end of the base body.

8. The radar according to claim 6, **characterized in that**
a shape of the upper cover is adapted to the shape enclosed by the first detection assembly, the second detection assembly, and the power supply assembly.

9. The radar according to claim 6, **characterized in that**
the radar comprises a heat dissipation assembly, the heat dissipation assembly is accommodated in the housing, the heat dissipation assembly comprises a first heat conductive pad, a second heat conductive pad, a first heat dissipation piece, and a second heat dissipation piece, the first heat conductive pad is mounted between the first radio frequency chip and the first heat dissipation piece, the second heat conductive pad is mounted between the second radio frequency chip and the second heat dissipation piece, and the first heat dissipation piece and the second heat dissipation piece are both mounted on the base.

10. The radar according to claim 6, **characterized in that**
the radar further comprises a sealing ring, the base is provided with a sealing groove, the sealing ring is provided on the sealing groove, and when the upper cover covers the base, an inner wall of the upper cover abuts against the sealing ring.

11. The radar according to any one of claims 1 to 5, **characterized in that**
a sealing gasket is embedded in the connection port, and when the connector is inserted into the connection port, the connector abuts against the sealing gasket.

12. The radar according to any one of claims 1 to 5, **characterized in that**
a value of the first detection viewing angle is greater than or equal to 90 degrees and less than or equal to 150 degrees;
the value of the second detection viewing angle is greater than or equal to 90 degrees and less than or equal to 150 degrees;
the preset angle is greater than or equal to 90 degrees and less than or equal to 150 degrees.

13. An early-warning system, **characterized by** comprising
the radar according to any one of claims 1-12, and,
an acoustic early-warning device and/or a display screen early-warning device, wherein the radar is electrically connected to the acoustic early-warning device and/or the display screen early-warning device.
